(19) Europäisches Patentamt
European Patent Office
Office européen des brevets

(11) EP 1 574 552 B1

(12) **EUROPEAN PATENT SPECIFICATION**

(45) Date of publication and mention of the grant of the patent:
**15.08.2007 Bulletin 2007/33**

(21) Application number: **03780785.6**

(22) Date of filing: **16.12.2003**

(51) Int Cl.:
***C09D 11/00*** *(2006.01)* ***B41M 5/00*** *(2006.01)*
***B41J 2/01*** *(2006.01)* ***C09B 29/30*** *(2006.01)*
***C09B 62/085*** *(2006.01)*

(86) International application number:
**PCT/JP2003/016103**

(87) International publication number:
**WO 2004/055121 (01.07.2004 Gazette 2004/27)**

(54) **RECORDING LIQUID**

AUFZEICHNUNGSFLÜSSIGKEIT

LIQUIDE D'IMPRESSION

(84) Designated Contracting States:
**DE GB**

(30) Priority: **16.12.2002 JP 2002363836**

(43) Date of publication of application:
**14.09.2005 Bulletin 2005/37**

(73) Proprietor: **Mitsubishi Chemical Corporation**
**Minato-ku**
**Tokyo 108-0014 (JP)**

(72) Inventors:
- **SANO, Hideo**
**Mitsubishi Chemical Group**
**Yokohama-shi, Kanagawa 227-8502 (JP)**
- **SHIMIZU, Wataru**
**c/o Mitsubishi Chem. Gr.**
**Yokohama-shi, Kanagawa 227-8502 (JP)**

(74) Representative: **TER MEER - STEINMEISTER & PARTNER GbR**
**Patentanwälte**
**Mauerkircherstrasse 45**
**81679 München (DE)**

(56) References cited:
**WO-A1-99/01513** **JP-A- 11 279 469**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### TECHNICAL FIELD

The present invention relates to a recording liquid. More particularly, the present invention relates to a recording liquid suitable for ink-jet recording.

### BACKGROUND ART

A so-called ink-jet recording method has been put to practical use, in which recording is performed by ejecting droplets of a recording liquid containing a water-soluble dye such as a direct dye or an acid dye from a minute ejection orifice.

With respect to the recording liquid, it is required to exhibit fast fixing to a recording paper widely used for general office works, such as a sheet for PPC (plain paper copier) as electrophotographic paper and a fanfold paper (a continuous paper for computer, or the like), and also to exhibit a good print quality of printed matter; that is, a print needs to be free of blurring and have clear outlines. In addition, it is necessary to have excellent stability during storage as a recording liquid. Therefore, available solvents are considerably limited.

With respect to the dye for the recording liquid, it is required that it should have a sufficient solubility in the limited solvents as described above and, in addition, that it should be stable as a recording liquid even in long-term storage. Moreover, a printed image is demanded to have a high density and demonstrate excellent water and light resistance, and so on. In order to satisfy these many requirements simultaneously, studies on various dyes have been made. It is known that when recording on plain paper is performed with a recording liquid using a 1-amino-8-naphthol-3,6-disulfonic acid (H acid)-based monoazo dye among them, it gives a magenta-type recorded material in excellent color tone and high density (cf. JP-A-8-73791). It is also known that among the above dyes, a dye having an anilino group substituted by a sulfonic acid group and an amino group as a substituent in a triazine ring exhibits high fastness to water on plain paper (cf. JP-A-11-279469).

### DISCLOSURE OF THE INVENTION

It turned out that the dyes described in the above documents were still unsatisfactory with respect to the light resistance, the ozone resistance, and so on, and there are desires for advent of a dye having a better performance balance.

The present inventors have studied diligently to solve the above problem, and found that a recording liquid containing a dye in which the substituent in the triazine ring is an aryl amino group having a sulfonic acid group and a specific substituent, among the above dyes, gives recorded matter excellent in the light resistance and the ozone resistance, thereby reaching the present invention. Namely, the gist of the present invention is a recording liquid comprising an aqueous medium and at least one dye selected from monoazo dyes the free acid form of which is represented by general formula (1) below, and a monoazo dye for recording liquid, the free acid form of which is represented by general formula (1) below:

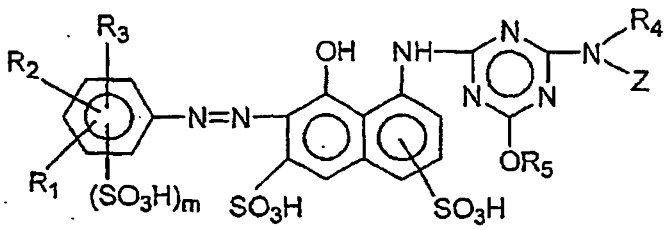

(1)

wherein $R_1$, $R_2$ and $R_3$ each independently represent a hydrogen atom, a halogen atom, a hydroxyl group, a nitro group, a COOH group, a substituted or unsubstituted alkyl group having 1 to 9 carbon atoms, a substituted or unsubstituted alkoxyl group having 1 to 9 carbon atoms, a substituted or unsubstituted carbamoyl group, a substituted or unsubstituted sulfamoyl group, a substituted or unsubstituted amino group, a substituted or unsubstituted alkylsulfonyl group having 1 to 9 carbon atoms, a substituted or unsubstituted arylsulfonyl group having 6 to 15 carbon atoms, a sulfonic ester group or a carboxylic ester group,

m represents a number of 0, 1 or 2,

$R_4$ represents a hydrogen atom or a substituted or unsubstituted alkyl group having 1 to 9 carbon atoms,

$R_5$ represents a hydrogen atom, a substituted or unsubstituted alkyl group having 1 to 18 carbon atoms, a substituted or unsubstituted alkenyl group having 2 to 18 carbon atoms, a substituted or unsubstituted aryl group, a substituted or unsubstituted alicyclic group or a substituted or unsubstituted heterocyclic group, and
Z represents a group represented by the following general formula (2):

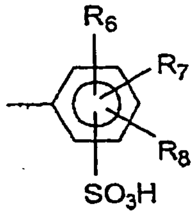

(2)

(wherein $R_6$, $R_7$ and $R_8$ each independently represent a hydrogen atom, a halogen atom, a hydroxyl group, a nitro group, a COOH group, a substituted or unsubstituted alkyl group having 1 to 9 carbon atoms, a substituted or unsubstituted alkoxyl group having 1 to 9 carbon atoms, a substituted or unsubstituted carbamoyl group, a substituted or unsubstituted sulfamoyl group, a substituted amino group, a sulfonic ester group or a carboxylic ester group, in which the sulfonic acid group is located at the ortho position or at the meta position), or a group represented by the following general formula (3):

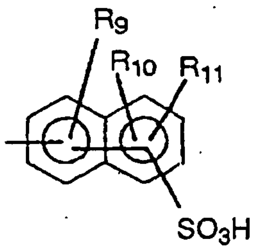

(3)

(wherein $R_9$, $R_{10}$ and $R_{11}$ each independently represent a hydrogen atom, a hydroxyl group, a nitro group, a COOH group or a substituted or unsubstituted amino group).

The present invention will be described below in detail.

BEST MODE FOR CARRYING OUT THE INVENTION

The dye to be used in the present invention is a dye, the free acid form of which is represented by the above general formula (1).

In the above general formula (1), $R_1$, $R_2$ and $R_3$ each independently represent a hydrogen atom; a halogen atom such as a fluorine atom, a chlorine atom or a bromine atom; a hydroxyl group; a nitro group; a COOH group; a substituted or unsubstituted alkyl group having 1 to 9 carbon atoms; a substituted or unsubstituted alkoxyl group having 1 to 9 carbon atoms; a substituted or unsubstituted carbamoyl group; a substituted or unsubstituted sulfamoyl group; a substituted or unsubstituted amino group; a substituted or unsubstituted alkylsulfonyl group having 1 to 9 carbon atoms; a substituted or unsubstituted arylsulfonyl group having 6 to 15 carbon atoms; a sulfonic ester group or a carboxylic ester group.

Here, the substituted or unsubstituted alkyl group having 1 to 9 carbon atoms may be an alkyl group which may be substituted by a substituent selected from the group consisting of halogen atoms and an amino group, such as a methyl group, an ethyl group, an n-propyl group, an isopropyl group, an n-butyl group, a trifluoromethyl group or a dimethylaminomethyl group. Among them, it is preferably one having 1 to 4 carbon atoms, particularly preferably a haloalkyl group having 1 to 4 carbon atoms, and still particularly preferably a trifluoromethyl group.

The substituted or unsubstituted alkoxyl group having 1 to 9 carbon atoms may be an alkoxyl group which may be substituted by a hydroxyl group, such as a methoxyl group, an ethoxyl group, an isopropoxyl group, an n-butoxyl group or a hydroxyethoxyl group. Among them, it is preferably one having 1 to 4 carbon atoms, more preferably an unsubstituted alkoxyl group having 1 to 4 carbon atoms, and particularly preferably a methoxyl group.

The substituted or unsubstituted carbamoyl group may be a carbamoyl group which may be substituted by a substituent selected from the group consisting of alkyl groups and aryl groups, such as a carbamoyl group, an N,N-dimethylcarbamoyl group or a phenylcarbamoyl group. Among them, it is preferably a carbamoyl group.

The substituted or unsubstituted sulfamoyl group may be a sulfamoyl group which may be substituted by a substituent selected from the group consisting of alkyl groups and aryl groups, such as a sulfamoyl group, an N-methylsulfamoyl group, an N-ethylsulfamoyl group, an N-ethyl-N-phenylsulfamoyl group, an N,N-dimethylsulfamoyl group or a p-carboxyphenylsulfamonyl group. Among them, it is preferably a sulfamoyl group.

The substituted or unsubstituted amino group may be an amino group which may be substituted by a substituent selected from the group consisting of alkyl groups, aryl groups, a carbamoyl group and acyl groups such as an N-methylamino group, an N,N-dimethylamino group, an N,N-diethylamino group, a phenylamino group, a carbamoylamino group or an acetylamino group. Among them, it is preferably an acylamino group, and particularly preferably an acetylamino group.

The substituted or unsubstituted alkylsulfonyl group having 1 to 9 carbon atoms may be an alkylsulfonyl group having 1 to 9 carbon atoms which may be substituted by a substituent selected from the group consisting of a hydroxyl group and aryl groups, such as a methylsulfonyl group, a hydroxyethylsulfonyl group or a benzylsulfonyl group. Among them, it is preferably one having 1 to 4 carbon atoms, more preferably an unsubstituted alkylsulfonyl group having 1 to 4 carbon atoms, and particularly preferably a methylsulfonyl group.

The substituted or unsubstituted arylsulfonyl group having 6 to 15 carbon atoms may be an arylsulfonyl group which may be substituted by an alkyl group, such as a phenylsulfonyl group or a tolylsulfonyl group. Among them, it is preferably a phenylsulfonyl group.

The sulfonic ester group may be an alkoxysulfonyl group such as a methoxysulfonyl group or an ethoxysulfonyl group, or an aryloxysulfonyl group such as a phenoxysulfonyl group. Among them, it is preferably an alkoxysulfonyl group having 1 to 6 carbon atoms, a benzyloxysulfonyl group or a phenylsulfonyl group, and more preferably an alkoxysulfonyl group having 1 to 4 carbon atoms.

The carboxylic ester group may be an alkoxycarbonyl group such as a methoxycarbonyl group or an ethoxycarbonyl group, or an aryloxycarbonyl group such as a phenoxycarbonyl group. Among them, it is preferably an alkoxycarbonyl group having 1 to 6 carbon atoms, a benzyloxycarbonyl group or a phenoxycarbonyl group, more preferably an alkoxycarbonyl group having 1 to 4 carbon atoms, and particularly preferably a methoxycarbonyl group.

Among these, preferred substituents are a hydrogen atom, a halogen atom, a COOH group, a trifluoromethyl group, a substituted or unsubstituted carbamoyl group, a substituted or unsubstituted sulfamoyl group, a sulfonic acid alkyl ester group having 1 to 4 carbons and a carboxylic acid alkyl ester group having 1 to 4 carbons.

Furthermore, a preferable combination of substituents for the above $R_1$ to $R_3$ is a case in which at least one of them is a hydrogen atom, and a further preferable combination is a case in which at least one of the above $R_1$ to $R_3$ is a substituent selected from the group consisting of a COOH group, a trifluoromethyl group, a substituted or unsubstituted carbamoyl group, a substituted or unsubstituted sulfamoyl group, a sulfonic acid alkyl ester group having 1 to 4 carbons and a carboxylic acid alkyl ester group having 1 to 4 carbons, and in which the substituent is located at the ortho position relative to the azo group. A particularly preferable combination is a case in which two of $R_1$ to $R_3$ are a combination of a halogen atom with a COOH group.

m represents an integer of 0 to 2, among which 0 or 1 is preferred.

$R_4$ represents a hydrogen atom or a substituted or unsubstituted alkyl group having 1 to 9 carbon atoms, specific examples of which include the same substituents as exemplified in the above description of $R_1$ to $R_3$.

Among them, $R_4$ is preferably a hydrogen atom.

$R_5$ represents a hydrogen atom, a substituted or unsubstituted alkyl group having 1 to 18 carbon atoms, a substituted or unsubstituted alkenyl group having 2 to 18 carbon atoms, a substituted or unsubstituted aryl group, a substituted or unsubstituted alicyclic group or a substituted or unsubstituted heterocyclic group.

The above substituted or unsubstituted alkyl group having 1 to 18 carbon atoms may be an alkyl group which may be substituted by a substituent selected from the group consisting of a hydroxyl group, a carboxyl group, a mercapto group, a carbamoyl group, alicyclic groups and aryl groups, such as a methyl group, an ethyl group, an n-butyl group, an n-octyl group, an ethylhexyl group, a hydroxyethyl group, a carboxypropyl group, a carboxycyclohexylmethyl group, a 1-carboxy-2-mercaptoethyl group, a 1-carboxy-2-carbamoyl-ethyl group, a 1-isopropyl-1-carboxymethyl group, a 1,2-dicarboxypropyl group, a benzyl group, a 1-carboxy-2-phenylethyl group, a 1-carboxy-2-hydroxyphenylethyl group or a 4-carboxybenzyl group wherein the above alicyclic groups and aryl groups may be further substituted by a hydroxyl group, a carboxyl group or an alkyl group. Among them, it is preferably a non-substituted alkyl group having 1 to 4 carbon atoms and particularly preferably a methyl group.

The substituted or unsubstituted alkenyl group having 2 to 18 carbon atoms may be an alkenyl group which may be substituted by an alkyl group, such as a 2-methyl-1-propenyl group, a vinyl group or an allyl group. Among them, it is preferably one having at most 4 carbon atoms and particularly preferably a vinyl group.

The aryl group may be a phenyl group or a naphthyl group which may be substituted by a substituent selected

from the group consisting of a hydroxyl group, alkyl groups and a carboxyl group, such as a phenyl group, a 3,4-dicarboxyphenyl group, a 4-butylphenyl group or a 4-carboxyphenyl group. Among them, it is preferably a phenyl group or a naphthyl group which may be substituted by a substituent selected from the group consisting of alkyl groups and a carboxyl group, and particularly preferably a phenyl group.

The alicyclic group may be one having 6 to 10 carbon atoms, which may be substituted by a carboxyl group, such as a cyclohexyl group or a 4-carboxycyclohexyl group. Among them, it is preferably a cyclohexyl group.

The heterocyclic group may be one having at most 10 carbon atoms, such as a pyridyl group, a thiadiazolyl group, a benzothiazolyl group or a 2,2,6,6-tetramethylpiperidinyl group. Among them, it is preferably a nitrogen-containing heterocyclic ring having at least one or two nitrogen atoms as the hetero atom, and particularly preferably a five- to six-membered nitrogen-containing heterocyclic ring. Among these, a pyridyl group is preferably applicable.

Among the above substituents, $R_5$ is preferably a hydrogen atom, an alkyl group or an aryl group, and particularly preferably a hydrogen atom.

Z represents a group represented by the above general formula (2) or (3).

In the group represented by the general formula (2), $R_6$, $R_7$ and $R_8$ each independently represent a hydrogen atom; a halogen atom such as a fluorine atom, a chlorine atom or a bromine atom; a hydroxyl group; a nitro group; a COOH group; a substituted or unsubstituted alkyl group having 1 to 9 carbon atoms; a substituted or unsubstituted alkoxyl group having 1 to 9 carbon atoms; a substituted or unsubstituted carbamoyl group; a substituted or unsubstituted sulfamoyl group; a substituted amino group; a sulfonic ester group or a carboxylic ester group. Among them, it is preferably a hydrogen atom, a halogen atom, a hydroxyl group, a nitro group, a COOH group, a substituted or unsubstituted alkyl group having 1 to 9 carbon atoms, a substituted or unsubstituted alkoxyl group having 1 to 9 carbon atoms, a substituted or unsubstituted carbamoyl group, a substituted or unsubstituted sulfamoyl group, a sulfonic ester group or a carboxylic ester group.

Here, the substituted or unsubstituted alkyl group having 1 to 9 carbon atoms; the substituted or unsubstituted alkoxyl group having 1 to 9 carbon atoms; the substituted or unsubstituted carbamoyl group; the substituted or unsubstituted sulfamoyl group; the sulfonic ester group and the carboxylic ester group may be the same groups as exemplified in the above description of $R_1$ to $R_3$. The substituted amino group may be an amino group which may be substituted by a substituent selected from the group consisting of alkyl groups, aryl groups, a carbamoyl group, acyl groups and hetero ring groups, such as an N-methylamino group, an N,N-dimethylamino group, an N,N-diethylamino group, a phenylamino group, a carbamoylamino group, an acetylamino group or a triazinylamino group.

Furthermore, the sulfonic acid group is located at the ortho position or at the meta position, and preferably at the meta position.

In the above general formula (3), $R_9$, $R_{10}$ and $R_{11}$ each independently represent a hydrogen atom, a hydroxyl group, a nitro group, a COOH group or a substituted or unsubstituted amino group. Here, the substituted or unsubstituted amino group may be the same group as exemplified in the above description of $R_1$ to $R_3$.

Furthermore, the dye represented by the above general formula (1), to be used in the present invention, is preferably one of molecular structure having at least three groups in total selected from groups of $SO_3H$, COOH or salts of these acids, and is preferably one of molecular structure having at most eight, more preferably at most five, groups in total.

It is particularly preferably one having three or four sulfonic acid groups and/or salts thereof, or one having one or two carboxyl groups and/or salts thereof.

The dye to be used in the present invention may be used as it is in the form of the free acid as represented by general formula (1), and in a case where it is obtained in the form of a salt in production, it may be used as it is, or it may be converted to a desired salt form. A conversion method into a salt form can be one of known methods optionally adopted, and examples of the known methods include the following methods.

1) A salt conversion method comprising adding a strong acid such as hydrochloric acid to an aqueous solution of a dye obtained in the form of a salt to precipitate the dye in the form of a free acid, and then neutralizing an acidic group of the dye with an alkali solution having a desired counter ion (for example, an aqueous solution of lithium hydroxide).
2) A salt conversion method comprising adding a quite excessive amount of a neutral salt having a desired counter ion (for example, lithium chloride) to an aqueous solution of a dye obtained in the form of a salt to convert it to the salt in the form of a salting-out cake.
3) A salt conversion method comprising treating an aqueous solution of a dye obtained in the form of a salt with a strong acid ion exchange resin to precipitate the dye in the form of a free acid, and then neutralizing an acid group of the dye with an alkali solution having a desired counter ion (for example, an aqueous solution of lithium hydroxide).
4) A salt conversion method comprising treating an aqueous solution of a dye obtained in the form of a salt, with a strong acid ion exchange resin preliminarily treated with an alkali solution having a desired counter ion (for example, an aqueous solution of lithium hydroxide).

Furthermore, the dye to be used in the present invention may be one of structure in which one or more acid groups are in the form of a salt, or one of structure in which a dye in the form of a salt and a dye in the form of a free acid are mixed. Whether the acid group takes the form of a free acid or the form of a salt depends on pKa of the dye and pH of ink, and it is normally preferable that the sulfonic acid group or groups take the form of a salt and that more sulfonic acid groups take the salt form than carboxyl groups, in view of preventing the ink from clogging. On the other hand, a dye in which a carboxyl group or groups take the form of an acid is preferably used in a case where the water resistance and blurring resistance are significantly concerned.

The dye applicable to the present invention is used at pH 2 to 12, preferably at pH 4 to 11, and more preferably at pH 6 to 10, and in particular, it shows excellent performance even in a case where it is used as basic ink.

Examples of the above salt form include a salt of an alkali metal such as Na, Li or. K, a salt of an ammonium which may be substituted by an alkyl group or a hydroxyalkyl group, and a salt of an organic amine. Examples of the organic amine include a lower alkylamine having 1 to 6 carbon atoms, a hydroxyl-substituted lower alkylamine having 1 to 6 carbon atoms, a carboxyl-substituted lower alkylamine having 1 to 6 carbon atoms and a polyamine having 2 to 10 alkyleneimine units each having 2 to 4 carbon atoms. In the case of these salt forms, the salt is not limited to one kind but a mixture of plural kinds of salts may be present.

With respect to selection of the kind of the counter ion constituting the salt form, it is freely selected in accordance with the property of the ink to be significantly concerned. Since there are many Na-containing intermediates and reagents used for synthesis of dyes, many dyes are generally obtained in the form of an Na salt. In a case where the water resistance is considerably concerned, the dye is often converted to an $NH_4$ salt. Where it is necessary to maintain prevention of clogging at a higher level by increasing the solubility of the dye, the dye is sometimes converted to the form of an Li salt or to the form of an alkanolamine salt typified by triethanolamine.

Specific examples of these dyes include, for example, dyes of structures represented by No. (1) to No. (27) below.

(1)

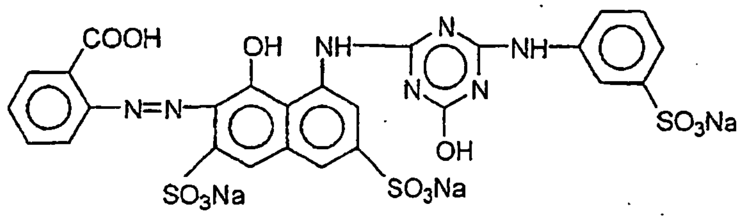

(2)

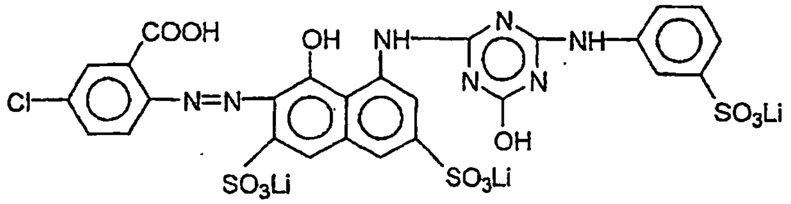

(3)

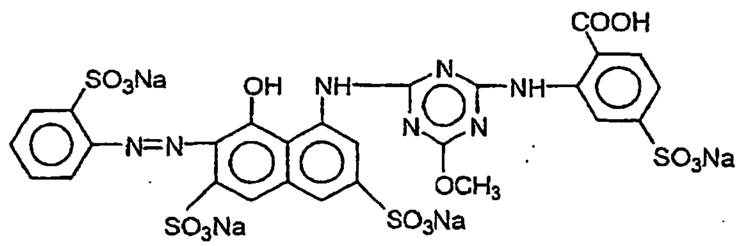

(4)

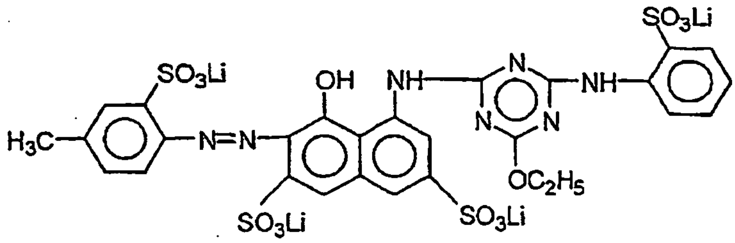

(5)

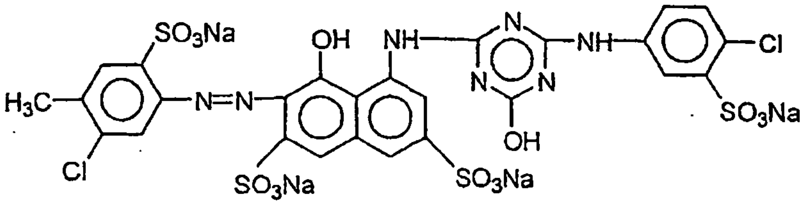

(6)

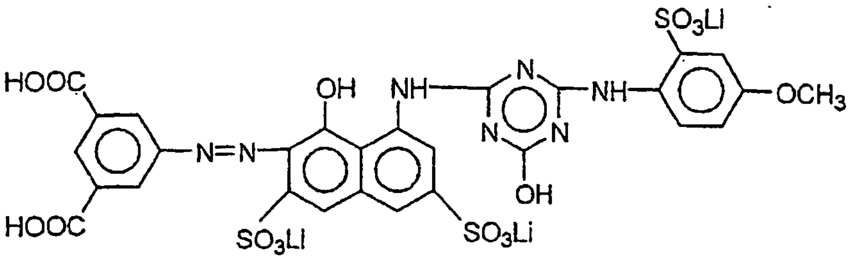

(7)

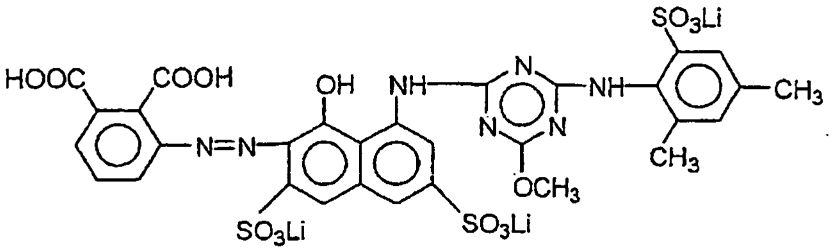

(8)

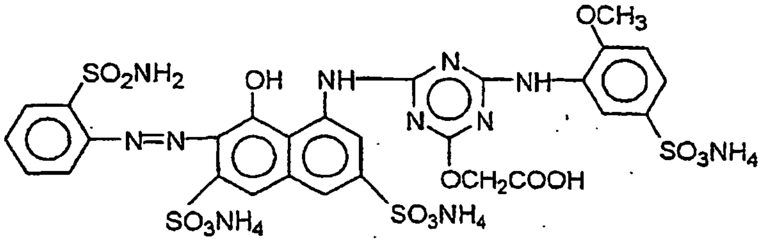

(9)

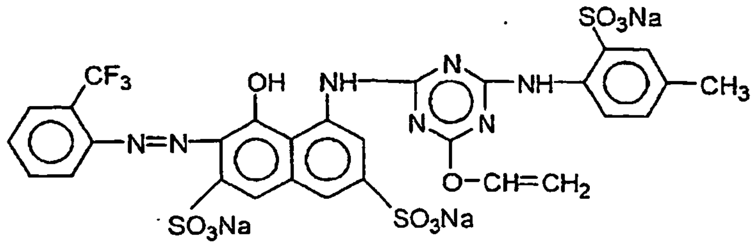

(10)

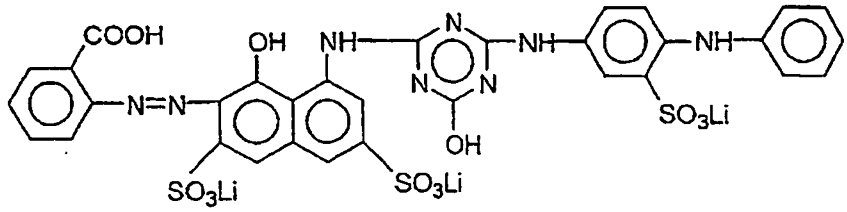

(11)

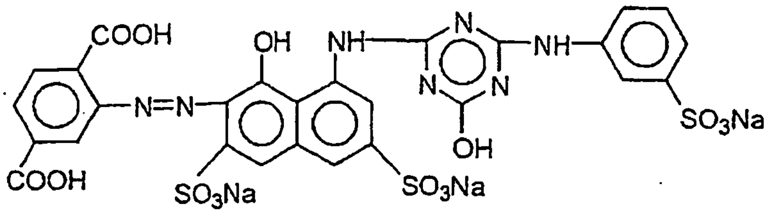

(12)

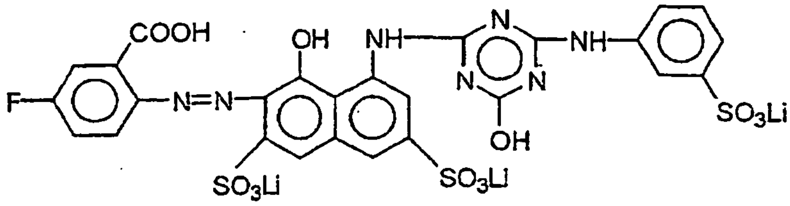

(13)

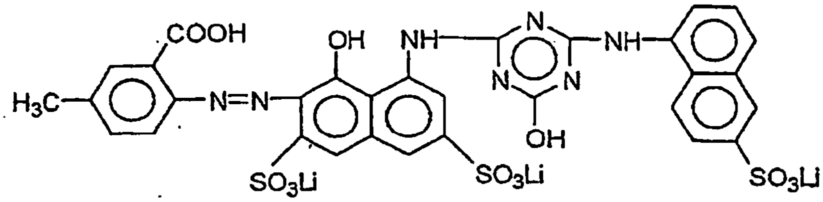

(14)

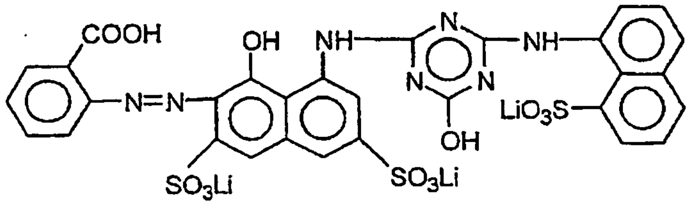

(15)

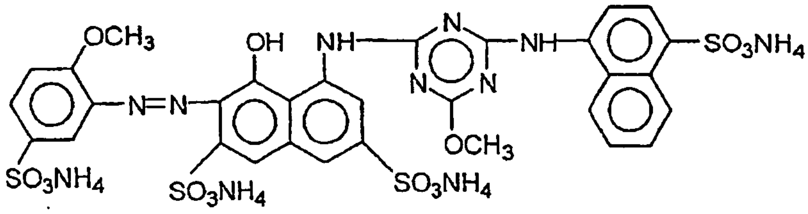

(16)

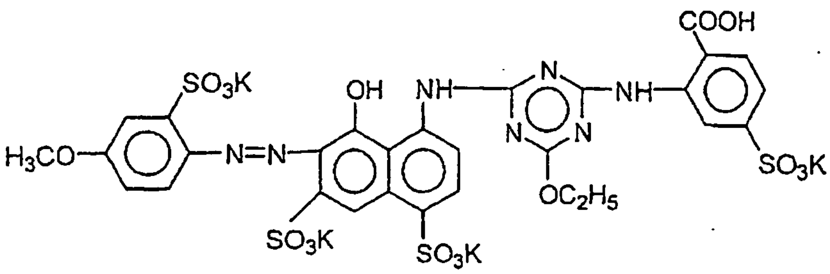

(17)

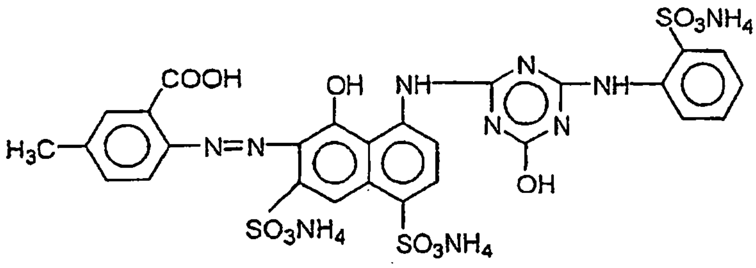

(18)

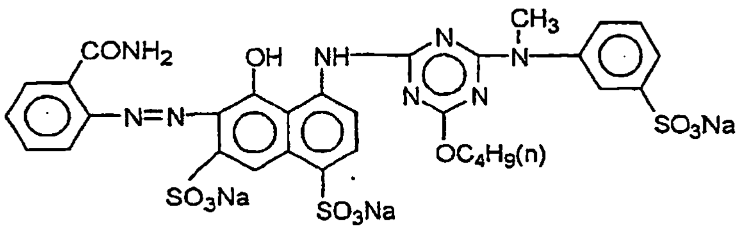

(19) 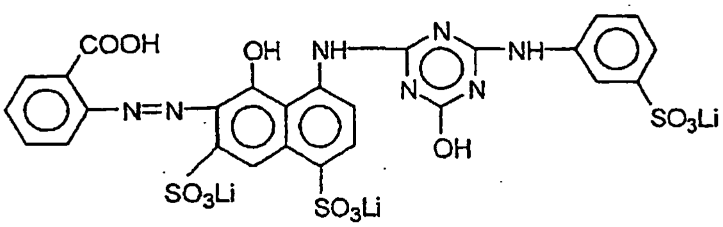

(20) 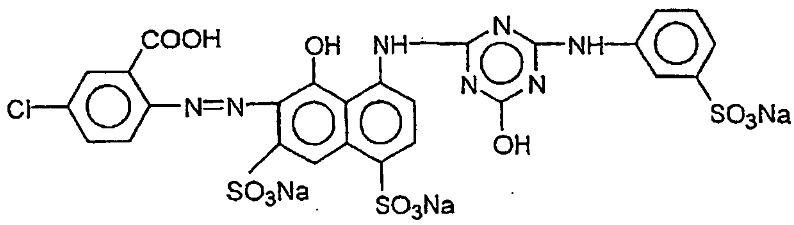

(21) 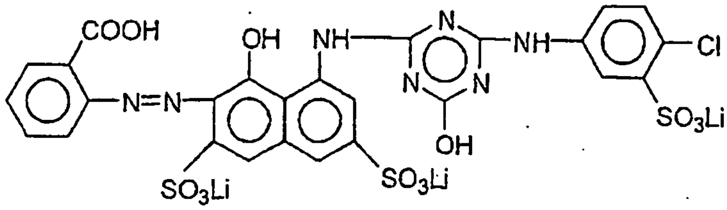

(22) 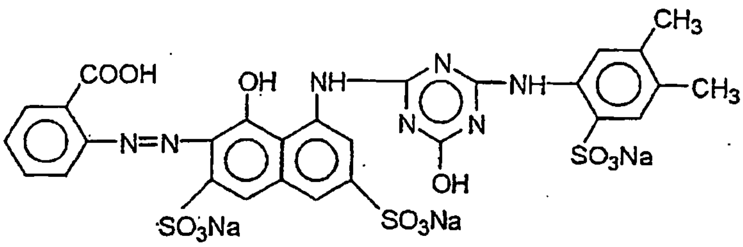

(23) 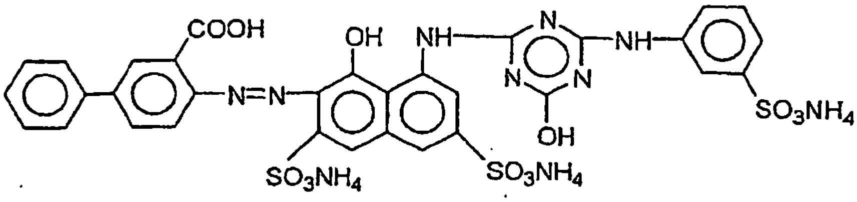

(24)

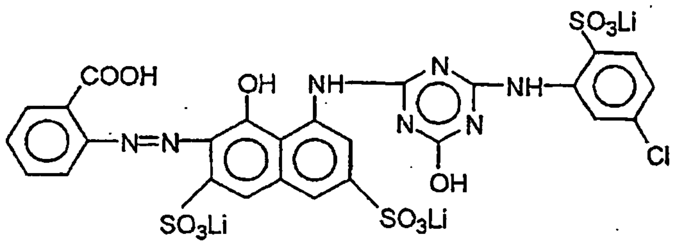

(25)

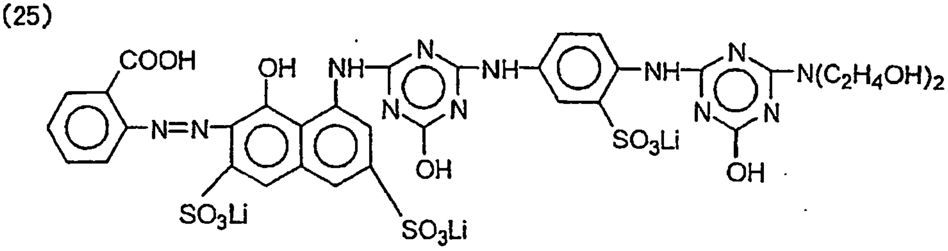

(26)

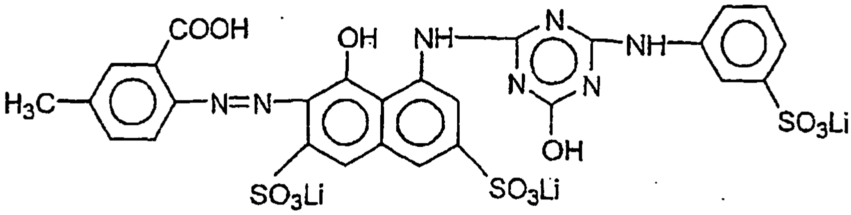

(27)

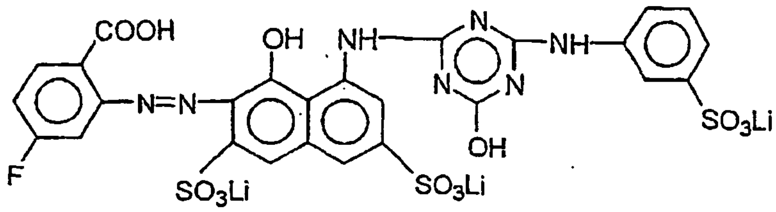

The monoazo dye represented by the above general formula (1) can be produced in accordance with a method which is per se well known. For example, the dye represented by No. (1) can be produced through steps (A) to (C) below.

(A) A monoazo compound is produced from 2-aminobenzoic acid (anthranilic acid) and 1-amino-8-hydroxy-3,6-naphthalenedisulfonic acid (H acid) through diazotization and coupling steps according to a known method (cf. "Shinsenryo Kagaku" written by Yutaka Hosoda, published by Gihodo, on December 21, 1973, pp.396-409, for example).

(B) The monoazo compound obtained is added to a suspension of cyanuric chloride while maintaining pH in the range of 4 to 6 and temperature in the range of 0 to 5°C, and reaction is conducted for several hours. Then an aqueous solution of 3-aminobenzenesulfonic acid (metanilic acid) is added to the mixture at room temperature to conduct a condensation reaction for several hours, while controlling the mixture not to be alkaline. Then a 25% aqueous solution of sodium hydroxide is added at a temperature of 50 to 60°C to adjust the mixture to strong alkalinity, thereby performing a hydrolysis reaction and completing the reaction.

(C) After cooling, the resulting mixture is subjected to salting-out with sodium chloride to obtain the aimed dye No. (1).

The recording liquid of the present invention comprises an aqueous solvent and a dye represented by the aforementioned general formula (1), and a content of the latter dye is preferably in a level of from 0.5 to 5% by weight, particularly preferably in a level of from 2 to 4% by weight, based on the total amount of the recording liquid.

The aqueous medium applicable to the recording liquid of the present invention is water and/or a water-soluble organic solvent. The recording liquid preferably contains the water-soluble organic solvent selected, for example, from ethylene glycol, propylene glycol, butylene glycol, diethylene glycol, triethylene glycol, polyethylene glycol (#200), polyethylene glycol (#400), glycerol, N-methylpyrrolidone, N-ethylpyrrolidone, 1,3-dimethylimidazolidinone, thiodiethanol, dimethyl sulfoxide, ethylene glycol monoallyl ether, ethylene glycol monomethyl ether, diethylene glycol monomethyl ether, 2-pyrrolidone, sulfolane, ethyl alcohol, isopropanol, and so on. These water-soluble organic solvents are normally preferably used in an amount of from 1 to 50% by weight, particularly preferably from 10 to 50% by weight, based on the total amount of the recording liquid. On the other hand, water is preferably used in an amount of from 45 to 95% by weight, particularly preferably from 45 to 85% by weight, based on the total amount of the recording liquid.

The property of quick drying after printing and the print quality can be further improved by adding to the recording liquid of the present invention at least one compound selected from the group consisting of urea, thiourea, biuret and semicarbazide in an amount of preferably from 0.1 to 10% by weight, particularly preferably from 0.5 to 5% by weight, based on the total amount of the recording liquid or by adding a surfactant to the recording liquid in an amount of from 0.001 to 5.0% by weight, based on the total amount of the recording liquid.

EXAMPLES

Now, the present invention will be explained in further detail with reference to examples, but the present invention is by no means restricted to such examples as long as it is within the spirit thereof.

EXAMPLE 1

Water was added to 10 parts by weight of diethylene glycol, 3 parts by weight of diethylene glycol monobutyl ether, and 3 parts by weight of the above dye of No. 1, and the pH was adjusted to 9 with a 10% aqueous solution of caustic soda to make the total amount 100 parts by weight. The composition was thoroughly mixed to dissolve the components, and was subjected to pressure filtration with a polytetrafluoroethylene filter having a pore size of 1 μm, followed by a degassing treatment by means of a vacuum pump and an ultrasonic cleaner, to prepare a recording liquid.

Using the obtained recording liquid, ink-jet recording was conducted on each of an electrophotographic paper (trade name "4024 paper" manufactured by Xerox Corporation), a super fine specialized paper (trade name "MJA4SP1" manufactured by Seiko Epson Corporation), a PM mat paper (trade name: "KA450PM" manufactured by Seiko Epson Corporation) and a PM photographic paper (gloss) (trade name: "KA420PSK" manufactured by Seiko Epson Corporation) with an ink-jet printer (trade name: PM-750C, manufactured by Seiko Epson Corporation), to obtain a clear magenta printed matter.

The printed matters and the recording liquid were subjected to various tests below. Table 1 shows the results.

Light Resistance Test

Each printed matter was exposed to light for 80 hours by means of a xenon fadeometer (manufactured by Atlas), and discoloring and fading after the exposure was observed. Color tones before and after the test were measured by means of Gretag Macbeth SPM50 (manufactured by Gretag Macbeth) to obtain L*, a* and b* values. Then a ΔE value was calculated by the formula below (wherein $L^*_1$, $a^*_1$ and $b^*_1$ are values obtained from the color tone measurement before the light resistance test, and $L^*_2$, $a^*_2$ and $b^*_2$ are values obtained from the color tone measurement after the light resistance test). Here, the smaller the ΔE value, the smaller the degree of discoloring and fading.

$$\Delta E = \sqrt{(L^*_1 - L^*_2)^2 + (a^*_1 - a^*_2)^2 + (b^*_1 - b^*_2)^2}$$

Indoor Discoloring and Fading Resistance Test

Each printed matter was left in a light-shielded tank having an ozone concentration of 10 ppm for 4 hours, and discoloring and fading was observed, thereby obtaining a ΔE value in the same manner as above.

Print Quality Test

A chroma saturation of each printed matter was measured by means of Gretag Macbeth SPM50 (manufactured by Gretag Macbeth) and it was confirmed that each printed matter had a high chroma saturation.

Storage Stability Test for Recording Liquid

The recording liquid was placed and sealed in a polytetrafluoroethylene container, and stored at each of 5°C and 60°C for one month. Changes after one month were evaluated.

EXAMPLES 2 to 5

A recording liquid was prepared in the same manner as in Example 1 except that each of the dye shown in Table 1 was used instead of the above dye of No. 1, and printing was conducted using the recording liquid, resulting in obtaining a magenta printed matter of clear color tone in each case.

The various tests were conducted in the same manner as in Example 1 with respect to each of the printed matters and each of the recording liquids obtained.
Table 1 shows the results.

COMPARATIVE EXAMPLE 1

A recording liquid was prepared in the same manner as in Example 1 except that the dye of No. 1 described in JP-A-8-73791 was used instead of the above dye of No. 1, and printing was conducted using the recording liquid, resulting in obtaining a magenta printed matter of clear color tone.

The various tests were conducted in the same manner as in Example 1 with respect to the printed matter and the recording liquid obtained. Table 1 shows the results.

COMPARATIVE EXAMPLE 2

A recording liquid was prepared in the same manner as in Example 1 except that the dye of No. 2 described in JP-A-11-279469 was used instead of the above dye of No. 1, and printing was conducted using the recording liquid, resulting in obtaining a magenta printed matter of clear color tone.

The various tests were conducted in the same manner as in Example 1 with respect to the printed matter and the recording liquid obtained. Table 1 shows the results.

TABLE 1

| | | Example | | | | | Comparative Example | |
|---|---|---|---|---|---|---|---|---|
| | | 1 | 2 | 3 | 4 | 5 | 1 | 2 |
| Dye in recording liquid | | Dye of No.1 | Dye of No.2 | Dye of No. 11 | Dye of No. 20 | Dye of No. 27 | Dye of No. Dye 1 in JP-A-8-73791 | Dye of No. 2 Dye of No. 2 in JP-A-11-279469 |
| Light resistance test (ΔE) | Electrophotographic paper | 35 | 34 | 35 | 34 | 34 | 38 | 38 |
| | Super fine specialized paper | 65 | 69 | 63 | 65 | 66 | 81 | 77 |
| | PM mat paper | 25 | 22 | 24 | 28 | 24 | 34 | 36 |
| | PM photographic paper <gloss> | 25 | 25 | 23 | 20 | 12 | 34 | 32 |

(continued)

| | | Example | | | | | Comparative Example | |
|---|---|---|---|---|---|---|---|---|
| | | 1 | 2 | 3 | 4 | 5 | 1 | 2 |
| Indoor discoloring and fading resistance test (ΔE) | Electrophotographic paper | 1 to 2 | 1 to 2 | 1 to 2 | 1 to 2 | 1 to 2 | 1 to 2 | 1 to 2 |
| | Super fine specialized paper | 33 | 27 | 24 | 23 | 27 | 65 | 68 |
| | PM mat paper | 20 | 18 | 22 | 15 | 18 | 38 | 42 |
| | PM photographic paper <gloss> | 15 | 11 | 11 | 10 | 11 | 39 | 41 |
| Storage stability test for recording liquid test for recording liquid | | Good at both temp. | Good at both temp. | Good at both temp. | Good at both temp. | Good at both temp. | Good at both temp. | Good at 5°C Precipitated at 60°C |

INDUSTRIAL APPLICABILITY

The dye for ink-jet recording of the present invention is excellent in the solubility in water, and the recording liquid of the present invention containing this dye provides clear printed matter in a high density of a recorded image and with excellent light resistance and indoor discoloring and fading resistance, even when used as an aqueous ink-jet recording liquid in recording on a plain or specialized paper, and it also demonstrates good stability after long-term storage.

## Claims

**1.** A recording liquid comprising an aqueous medium and a monoazo dye, the free acid form of which is represented by the following general formula (1):

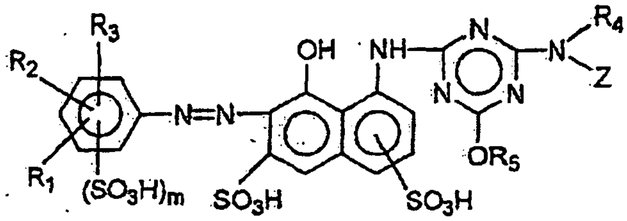

(1)

wherein $R_1$, $R_2$ and $R_3$ each independently represent a hydrogen atom, a halogen atom, a hydroxyl group, a nitro group, a COOH group, a substituted or unsubstituted alkyl group having 1 to 9 carbon atoms, a substituted or unsubstituted alkoxyl group having 1 to 9 carbon atoms, a substituted or unsubstituted carbamoyl group, a substituted or unsubstituted sulfamoyl group, a substituted or unsubstituted amino group, a substituted or unsubstituted alkylsulfonyl group having 1 to 9 carbon atoms, a substituted or unsubstituted arylsulfonyl group having 6 to 15 carbon atoms, a sulfonic ester group or a carboxylic ester group,
m is 0,
$R_4$ represents a hydrogen atom or a substituted or unsubstituted alkyl group having 1 to 9 carbon atoms,
$R_5$ represents a hydrogen atom, a substituted or unsubstituted alkyl group having 1 to 18 carbon atoms, a substituted or unsubstituted alkenyl group having 2 to 18 carbon atoms, a substituted or unsubstituted aryl group, a substituted or unsubstituted alicyclic group or a substituted or unsubstituted heterocyclic group, and
Z represents a group represented by the following general formula (2):

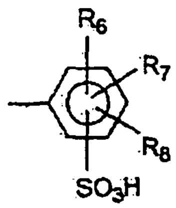

(2)

(wherein $R_6$, $R_7$ and $R_8$ each independently represent a hydrogen atom, a halogen atom, a hydroxyl group, a nitro group, a COOH group, a substituted or unsubstituted alkyl group having 1 to 9 carbon atoms, a substituted or unsubstituted alkoxyl group having 1 to 9 carbon atoms, a substituted or unsubstituted carbamoyl group, a substituted or unsubstituted sulfamoyl group, a substituted amino group, a sulfonic ester group or a carboxylic ester group, in which the sulfonic acid group is located at the ortho position or at the meta position), or a group represented by the following general formula (3):

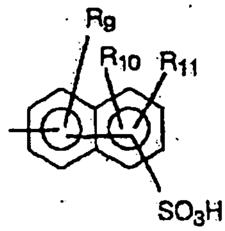

(3)

(wherein $R_9$, $R_{10}$ and $R_{11}$ each independently represent a hydrogen atom, a hydroxyl group, a nitro group, a COOH group or a substituted or unsubstituted amino group), wherein in the general formula (1), at least one of $R_1$ to $R_3$ is a substituent selected from the group consisting of a trifluoromethyl group, a COOH group, a substituted or unsubstituted carbamoyl group, a substituted or unsubstituted sulfamoyl group, a sulfonic acid alkyl ester group having 1 to 4 carbons or a carboxylic acid alkyl ester group having 1 to 4 carbons, the site of substitution thereof is the ortho position relative to the azo group, and at least one of the rest substituents is a hydrogen atom.

2. The recording liquid according to Claim 1, wherein the dye represented by the general formula (1) is present in the form of an acid and/or a salt.

3. The recording liquid according to Claim 1 or 2, wherein a content of the dye represented by the general formula (1) is 0.5 to 5% by weight based on the total amount of the recording liquid.

4. The recording liquid according to any one of Claims 1 to 3, containing a water-soluble organic solvent in a content of from 1 to 50% by weight based on the total amount of the recording liquid.

5. A recording liquid for ink-jet as defined in any one of Claims 1 to 4.

6. A monoazo dye for recording liquid, the free acid form of which is represented by the following general formula (1):

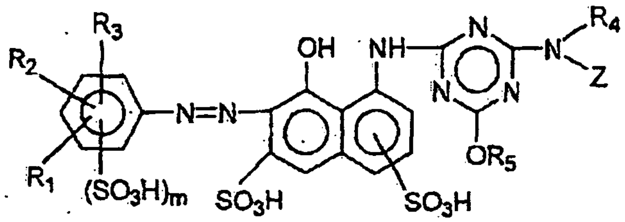

(1)

wherein $R_1$, $R_2$ and $R_3$ each independently represent a hydrogen atom, a halogen atom, a hydroxyl group, a nitro group, a COOH group, a substituted or unsubstituted alkyl group having 1 to 9 carbon atoms, a substituted or unsubstituted alkoxyl group having 1 to 9 carbon atoms, a substituted or unsubstituted carbamoyl group, a substituted or unsubstituted sulfamoyl group, a substituted or unsubstituted amino group, a substituted or unsubstituted alkylsulfonyl group having 1 to 9 carbon atoms, a substituted or unsubstituted arylsulfonyl group having 6 to 15 carbon atoms, a sulfonic ester group or a carboxylic ester group,
m is 0,
$R_4$ represents a hydrogen atom or a substituted or unsubstituted alkyl group having 1 to 9 carbon atoms,
$R_5$ represents a hydrogen atom, a substituted or unsubstituted alkyl group having 1 to 18 carbon atoms, a substituted or unsubstituted alkenyl group having 2 to 18 carbon atoms, a substituted or unsubstituted aryl group, a substituted or unsubstituted alicyclic group or a substituted or unsubstituted heterocyclic group, and
Z represents a group represented by the following general formula (2):

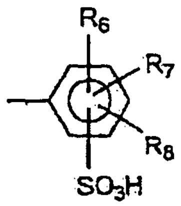

(2)

(wherein $R_6$, $R_7$ and $R_8$ each independently represent a hydrogen atom, a halogen atom, a hydroxyl group, a nitro group, a COOH group, a substituted or unsubstituted alkyl group having 1 to 9 carbon atoms, a substituted or unsubstituted alkoxyl group having 1 to 9 carbon atoms, a substituted or unsubstituted carbamoyl group, a substituted or unsubstituted sulfamoyl group, a substituted amino group, a sulfonic ester group or a carboxylic ester group, in which the sulfonic acid group is located at the ortho position or at the meta position), or a group represented by the following general formula (3):

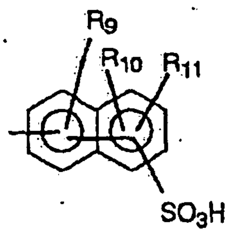

(3)

(wherein $R_9$, $R_{10}$ and $R_{11}$ each independently represent a hydrogen atom, a hydroxyl group, a nitro group, a COOH group or a substituted or unsubstituted amino group, wherein in the general formula (1), at least one of $R_1$ to $R_3$ is a substituent selected from the group consisting of a trifluoromethyl group, a COOH group, a substituted or unsubstituted carbamoyl group, a substituted or unsubstituted sulfamoyl group, a sulfonic acid alkyl ester group having 1 to 4 carbons or a carboxylic acid alkyl ester group having 1 to 4 carbons, the site of substitution thereof is the ortho position relative to the azo group, and at least one of the rest substituents is a hydrogen atom.

## Patentansprüche

**1.** Aufzeichnungsflüssigkeit, umfassend ein wässriges Medium und einen Monoazo-Farbstoff, dessen freie Säureform durch die folgende allgemeine Formel (1) dargestellt ist:

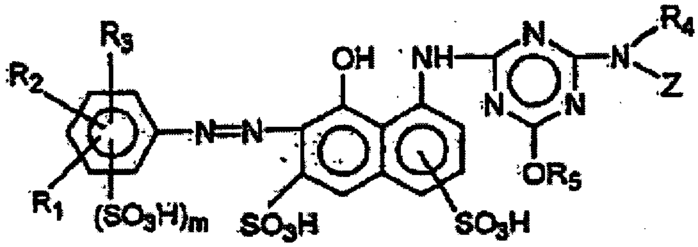

(1)

worin $R_1$, $R_2$ und $R_3$ jeweils unabhängig voneinander ein Wasserstoffatom, ein Halogenatom, eine Hydroxylgruppe, eine Nitrogruppe, eine COOH-Gruppe, eine substituierte oder unsubstituierte Alkylgruppe mit 1 bis 9 Kohlenstoffatomen, eine substituierte oder unsubstituierte Alkoxygruppe mit 1 bis 9 Kohlenstoffatomen, eine substituierte oder unsubstituierte Carbamoylgruppe, eine substituierte oder unsubstituierte Sulfamoylgruppe, eine substituierte oder unsubstituierte Aminogruppe, eine substituierte oder unsubstituierte Alkylsulfonylgruppe mit 1 bis 9 Kohlenstoffatomen, eine substituierte oder unsubstituierte Arylsulfonylgruppe mit 6 bis 15 Kohlenstoffatomen, eine Sulfonsäureestergruppe oder eine Carbonsäureestergruppe darstellen,
m 0 ist,
$R_4$ ein Wasserstoffatom oder eine substituierte oder unsubstituierte Alkylgruppe mit 1 bis 9 Kohlenstoffatomen darstellt,
$R_5$ ein Wasserstoffatom, eine substituierte oder unsubstituierte Alkylgruppe mit 1 bis 18 Kohlenstoffatomen, eine substituierte oder unsubstituierte Alkenylgruppe mit 2 bis 18 Kohlenstoffatomen, eine substituierte oder unsubstituierte Arylgruppe, eine substituierte oder unsubstituierte alicyclische Gruppe oder eine substituierte oder unsubstituierte heterocyclische Gruppe darstellt und
Z eine Gruppe darstellt, die durch die folgende allgemeine Formel (2) repräsentiert ist:

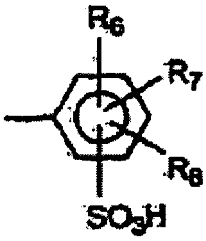

(2)

worin $R_6$, $R_7$ und $R_8$ jeweils unabhängig voneinander ein Wasserstoffatom, ein Halogenatom, eine Hydroxylgruppe, eine Nitrogruppe, eine COOH-Gruppe, eine substituierte oder unsubstituierte Alkylgruppe mit 1 bis 9 Kohlenstoffatomen, eine substituierte oder unsubstituierte Alkoxygruppe mit 1 bis 9 Kohlenstoffatomen, eine substituierte oder unsubstituierte Carbamoylgruppe, eine substituierte oder unsubstituierte Sulfamoylgruppe, eine substituierte Aminogruppe, eine Sulfonsäureestergruppe oder eine Carbonsäureestergruppe, worin die Sulfonsäuregruppe in der ortho-Position oder der meta-Position angeordnet ist, darstellen, oder eine Gruppe darstellt, die durch die folgende allgemeine Formel (3) repräsentiert ist:

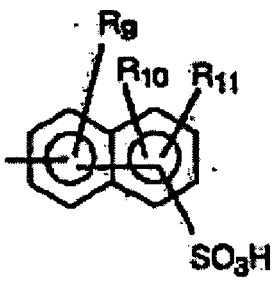

(3)

worin $R_9$, $R_{10}$ und $R_{11}$ jeweils unabhängig voneinander ein Wasserstoffatom, eine Hydroxylgruppe, eine Nitrogruppe,

eine COOH-Gruppe oder eine substituierte oder unsubstituierte Aminogruppe darstellen, worin in der allgemeinen Formel (1) mindestens einer aus $R_1$ bis $R_3$ ein Substituent ist, ausgewählt aus der Gruppe, bestehend aus einer Trifluormethylgruppe, einer COOH-Gruppe, einer substituierten oder unsubstituierten Carbamoylgruppe, einer substituierten oder unsubstituierten Sulfamoylgruppe, einer Sulfonsäurealkylestergruppe mit 1 bis 4 Kohlenstoffatomen oder einer Carbonsäurealkylestergruppe mit 1 bis 4 Kohlenstoffatomen, wobei deren Substitutionssstelle die ortho-Position relativ zu der Azogruppe darstellt, und mindestens einer der restlichen Substituenten ein Wasserstoffatom ist.

**2.** Aufzeichnungsflüssigkeit nach Anspruch 1, worin der Farbstoff, welcher durch die allgemeine Formel (1) dargestellt ist, in der Form einer Säure und/oder eines Salzes vorliegt.

**3.** Aufzeichnungsflüssigkeit nach Anspruch 1 oder 2, worin der Gehalt an Farbstoff, welcher durch die allgemeine Formel (1) dargestellt ist, 0,5 bis 5 Gew.-%, auf der Basis des Gesamtgewichts der Aufzeichnungsflüssigkeit, beträgt.

**4.** Aufzeichnungsflüssigkeit nach einem der Ansprüche 1 bis 3, welche ein wasserlösliches organisches Lösungsmittel in einem Gehalt von 1 bis 50 Gew.-%, auf der Basis des Gesamtgewichts der Aufzeichnungsflüssigkeit, enthält.

**5.** Aufzeichnungsflüssigkeit zum Tintenstrahldrucken, wie sie in einem der Ansprüche 1 bis 4 definiert ist.

**6.** Monoazofarbstoff für eine Aufzeichnungsflüssigkeit, wobei dessen freie Säureform durch die folgende allgemeine Formel (1) dargestellt ist:

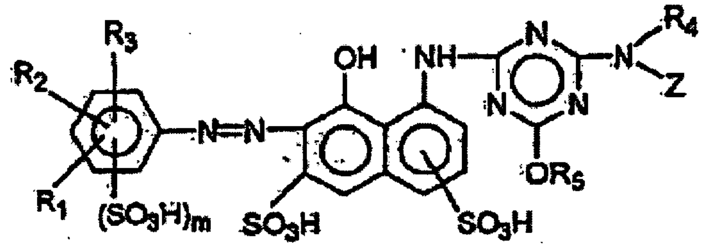

(1)

worin $R_1$, $R_2$ und $R_3$ jeweils unabhängig voneinander ein Wasserstoffatom, ein Halogenatom, eine Hydroxylgruppe, eine Nitrogruppe, eine COOH-Gruppe, eine substituierte oder unsubstituierte Alkylgruppe mit 1 bis 9 Kohlenstoffatomen, eine substituierte oder unsubstituierte Alkoxygruppe mit 1 bis 9 Kohlenstoffatomen, eine substituierte oder unsubstituierte Carbamoylgruppe, eine substituierte oder unsubstituierte Sulfamoylgruppe, eine substituierte oder unsubstituierte Aminogruppe, eine substituierte oder unsubstituierte Alkylsulfonylgruppe mit 1 bis 9 Kohlenstoffatomen, eine substituierte oder unsubstituierte Arylsulfonylgruppe mit 6 bis 15 Kohlenstoffatomen, eine Sulfonsäureestergruppe oder eine Carbonsäureestergruppe darstellen,
m 0 ist,
$R_4$ ein Wasserstoffatom oder eine substituierte oder unsubstituierte Alkylgruppe mit 1 bis 9 Kohlenstoffatomen darstellt,
$R_5$ ein Wasserstoffatom, eine substituierte oder unsubstituierte Alkylgruppe mit 1 bis 18 Kohlenstoffatomen, eine substituierte oder unsubstituierte Alkenylgruppe mit 2 bis 18 Kohlenstoffatomen, eine substituierte oder unsubstituierte Arylgruppe, eine substituierte oder unsubstituierte alicyclische Gruppe oder eine substituierte oder unsubstituierte heterocyclische Gruppe darstellt und
Z eine Gruppe darstellt, die durch die folgende allgemeine Formel (2) repräsentiert ist:

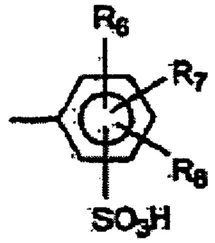

(2)

worin $R_6$, $R_7$ und $R_8$ jeweils unabhängig voneinander ein Wasserstoffatom, ein Halogenatom, eine Hydroxylgruppe, eine Nitrogruppe, eine COOH-Gruppe, eine substituierte oder unsubstituierte Alkylgruppe mit 1 bis 9 Kohlenstoffatomen, eine substituierte oder unsubstituierte Alkoxygruppe mit 1 bis 9 Kohlenstoffatomen, eine substituierte oder unsubstituierte Carbamoylgruppe, eine substituierte oder unsubstituierte Sulfamoylgruppe, eine substituierte Aminogruppe, eine Sulfonsäureestergruppe oder eine Carbonsäureestergruppe, worin die Sulfonsäuregruppe in der ortho-Position oder der meta-Position angeordnet ist, darstellen, oder eine Gruppe darstellt, die durch die folgende allgemeine Formel (3) repräsentiert ist:

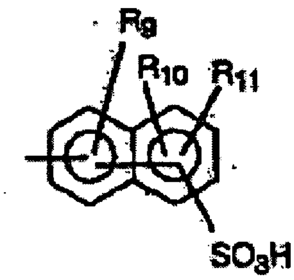

(3)

worin $R_9$, $R_{10}$ und $R_{11}$ jeweils unabhängig voneinander ein Wasserstoffatom, eine Hydroxylgruppe, eine Nitrogruppe, eine COOH-Gruppe oder eine substituierte oder unsubstitiuierte Aminogruppe darstellen, worin in der allgemeinen Formel (1) mindestens einer aus $R_1$ bis $R_3$ ein Substituent ist, ausgewählt aus der Gruppe, bestehend aus einer Trifluormethylgruppe, einer COOH-Gruppe, einer substituierten oder unsubstituierten Carbamoylgruppe, einer substituierten oder unsubstituierten Sulfamoylgruppe, einer Sulfonsäurealkylestergruppe mit 1 bis 4 Kohlenstoffatomen oder einer Carbonsäurealkylestergruppe mit 1 bis 4 Kohlenstoffatomen, wobei deren Substitutionssstelle die ortho-Position relativ zu der Azogruppe darstellt, und mindestens einer der restlichen Substituenten ein Wasserstoffatom ist.

## Revendications

1. Liquide d'enregistrement comprenant un milieu aqueux et un colorant monoazoïque, dont la forme acide libre est représentée par la formule générale (1) suivante:

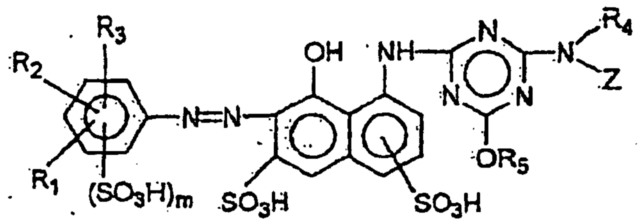

(1)

dans laquelle $R_1$, $R_2$ et $R_3$ représentent chacun indépendamment un atome d'hydrogène, un atome d'halogène, un groupe hydroxyle, un groupe nitro, un groupe COOH, un groupe alkyle substitué ou non substitué comportant 1 à 9 atomes de carbone, un groupe alcoxy substitué ou non substitué comportant 1 à 9 atomes de carbone, un groupe carbamoyle substitué ou non substitué, un groupe sulfamoyle substitué ou non substitué, un groupe amino substitué ou non substitué, un groupe alkylsulfonyle substitué ou non substitué comportant 1 à 9 atomes de carbone, un groupe arylsulfonyle substitué ou non substitué comportant 6 à 15 atomes de carbone, un groupe ester sulfonique ou un groupe ester carboxylique,
m est égal à 0,
$R_4$ représente un atome d'hydrogène ou un groupe alkyle substitué ou non substitué comportant 1 à 9 atomes de carbone,
$R_5$ représente un atome d'hydrogène, un groupe alkyle substitué ou non substitué comportant 1 à 18 atomes de carbone, un groupe alcényle substitué ou non substitué comportant 2 à 18 atomes de carbone, un groupe aryle substitué ou non substitué, un groupe alicyclique substitué ou non substitué ou un groupe hétérocyclique substitué ou non substitué, et
Z représente un groupe représenté par la formule générale (2) suivante :

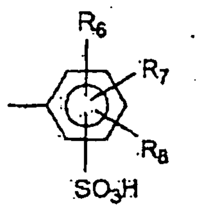

(2)

(dans laquelle $R_6$, $R_7$ et $R_8$ représentent chacun indépendamment un atome d'hydrogène, un atome d'halogène, un groupe hydroxyle, un groupe nitro, un groupe COOH, un groupe alkyle substitué ou non substitué comportant 1 à 9 atomes de carbone, un groupe alcoxy substitué ou non substitué comportant 1 à 9 atomes de carbone, un groupe carbamoyle substitué ou non substitué, un groupe sulfamoyle substitué ou non substitué, un groupe amino substitué, un groupe ester sulfonique ou un groupe ester carboxylique, dans lequel le groupe acide sulfonique est placé en position ortho ou en position méta), ou un groupe représenté par la formule générale (3) suivante :

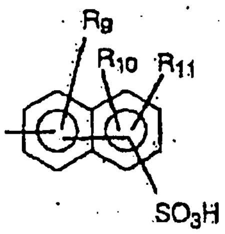

(3)

(dans laquelle $R_9$, $R_{10}$ et $R_{11}$ représentent chacun indépendamment un atome d'hydrogène, un groupe hydroxyle, un groupe nitro, un groupe COOH ou un groupe amino substitué ou non substitué), où, dans la formule générale (1), au moins un des radicaux $R_1$ à $R_3$ est un substituant choisi dans le groupe constitué par un groupe trifluorométhyle, un groupe COOH, un groupe carbamoyle substitué ou non substitué, un groupe sulfamoyle substitué ou non substitué, un groupe ester alkylique d'acide sulfonique comportant 1 à 4 atomes de carbone ou un groupe ester alkylique d'acide carboxylique comportant 1 à 4 atomes de carbone, dont le site de substitution est la position ortho par rapport au groupe azo, et au moins un des substituants restants est un atome d'hydrogène.

2. Liquide d'enregistrement selon la revendication 1, dans lequel le colorant représenté par la formule générale (1) est présent sous forme d'acide et/ou de sel.

3. Liquide d'enregistrement selon la revendication 1 ou 2 dans lequel la teneur en colorant représenté par la formule générale (1) est de 0,5 à 5% en poids par rapport à la quantité totale de liquide d'enregistrement.

4. Liquide d'enregistrement selon l'une quelconque des revendications 1 à 3 contenant un solvant organique soluble dans l'eau à raison de 1 à 50% en poids par rapport à la quantité totale de liquide d'enregistrement.

5. Liquide d'enregistrement pour jet d'encre tel que défini dans l'une quelconque des revendications 1 à 4.

6. Colorant monoazoïque pour liquide d'enregistrement, dont la forme acide libre est représentée par la formule générale (1) suivante :

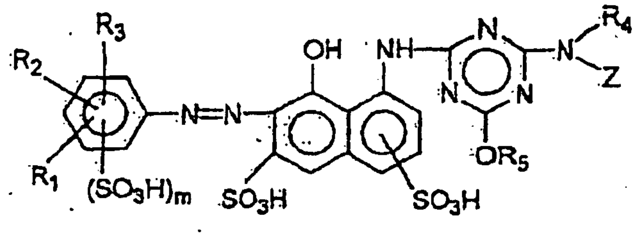

(1)

dans laquelle $R_1$, $R_2$ et $R_3$ représentent chacun indépendamment un atome d'hydrogène, un atome d'halogène, un groupe hydroxyle, un groupe nitro, un groupe COOH, un groupe alkyle substitué ou non substitué comportant 1 à 9 atomes de carbone, un groupe alcoxy substitué ou non substitué comportant 1 à 9 atomes de carbone, un groupe carbamoyle substitué ou non substitué, un groupe sulfamoyle substitué ou non substitué, un groupe amino substitué ou non substitué, un groupe alkylsulfonyle substitué ou non substitué comportant 1 à 9 atomes de carbone, un groupe arylsulfonyle substitué ou non substitué comportant 6 à 15 atomes de carbone, un groupe ester sulfonique ou un groupe ester carboxylique,
m est égal à 0,
$R_4$ représente un atome d'hydrogène ou un groupe alkyle substitué ou non substitué comportant 1 à 9 atomes de carbone,
$R_5$ représente un atome d'hydrogène, un groupe alkyle substitué ou non substitué comportant 1 à 18 atomes de carbone, un groupe alcényle substitué ou non substitué comportant 2 à 18 atomes de carbone, un groupe aryle substitué ou non substitué, un groupe alicyclique substitué ou non substitué ou un groupe hétérocyclique substitué ou non substitué, et
Z représente un groupe représenté par la formule générale (2) suivante :

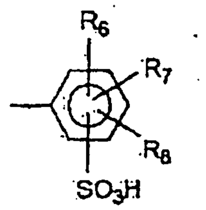

(2)

(dans laquelle $R_6$, $R_7$ et $R_8$ représentent chacun indépendamment un atome d'hydrogène, un atome d'halogène, un groupe hydroxyle, un groupe nitro, un groupe COOH, un groupe alkyle substitué ou non substitué comportant 1 à 9 atomes de carbone, un groupe alcoxy substitué ou non substitué comportant 1 à 9 atomes de carbone, un groupe carbamoyle substitué ou non substitué, un groupe sulfamoyle substitué ou non substitué, un groupe amino substitué, un groupe ester sulfonique ou un groupe ester carboxylique, dans lequel le groupe acide sulfonique est placé en position ortho ou en position méta), ou un groupe représenté par la formule générale (3) suivante :

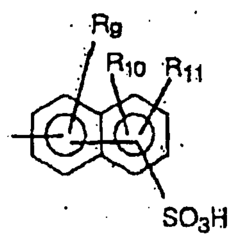

(3)

(dans laquelle $R_9$, $R_{10}$ et $R_{11}$ représentent chacun indépendamment un atome d'hydrogène, un groupe hydroxyle, un groupe nitro, un groupe COOH ou un groupe amino substitué ou non substitué), où, dans la formule générale (1), au moins un des radicaux $R_1$ à $R_3$ est un substituant choisi dans le groupe constitué par un groupe trifluorométhyle, un groupe COOH, un groupe carbamoyle substitué ou non substitué, un groupe sulfamoyle substitué ou non substitué, un groupe ester alkylique d'acide sulfonique comportant 1 à 4 atomes de carbone ou un groupe ester alkylique d'acide carboxylique comportant 1 à 4 atomes de carbone, dont le site de substitution est la position ortho par rapport au groupe azo, et au moins un des substituants restants est un atome d'hydrogène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 8073791 A
- JP 11279469 A


### Non-patent literature cited in the description


- **YUTAKA HOSODA.** *Shinsenryo Kagaku,* 21 December 1973, 396-409